# EUROPEAN PATENT APPLICATION

(11) **EP 4 786 130 A1**
(43) Date of publication of application: **05.08.2026**
(21) Application number: 25155089.3
(22) Date of filing: 30.01.2025
(51) Int. Cl.: B29B 9/06, B29C 48/04, B29C 48/14, B29C 48/355, B29C 48/88, B29C 48/94, B29C 48/92, B29C 48/05

(54) **PELLETIZING PROCESS FOR POLYMERS**

(71) Applicant: Basell Poliolefine Italia S.r.l., 20121 Milano (IT)
(72) Inventor: BAITA, Pietro, 44122 Ferrara (IT); BORSOI, Lorenzo, 44122 Ferrara (IT); CONSALVI, Marco, 44122 Ferrara (IT); IMPOCO, Stefano, 44122 Ferrara (IT)
(74) Representative: LyondellBasell

(57) **Abstract**

The disclosure relates to a continuous process for the production of dry polyolefin pellets comprising (a) pelletizing polyolefin melt material in an underwater pelletizing system in the presence of pellet cutting water to produce polyolefin pellets and (b) drying the polyolefin pellets. The process further comprising circulating the pellet cutting water in a pellet cutting water system comprising pellet cutting water temperature control means, pellet cutting water circulating means, and pellet cutting water storage means. The pellet cutting water contains one or more flow aid agents, one or more antifoam agents, and one or more antisticking agents.

## Description

### TECHNICAL FIELD OF THE INVENTION

The present invention relates to a continuous process for production of dry polyolefin pellets using an underwater pelletizing system.

### BACKGROUND OF THE INVENTION

Production of polyolefin pellets from monomers entails several steps including polymerization, cooling and solidification, cutting or extrusion, pelletization and drying, if necessary. Pelletization occurs in a pelletizer, which may employ a water bath or air cooling to further solidify the pellets and prevent sticking.

Pelletization serves a number of tasks. It ensures that the final product is uniform in size and shape. Pellets are easier to handle, transport, and store, as compared to bulk powders or flakes. The pellets can be more easily fed into extrusion and molding equipment, leading to improved processing efficiency and reduced downtime. Moreover, the pelletization process minimizes dust generation, enhancing workplace safety and reducing material waste. Finally, pellets typically have better flow properties, which can improve the performance of the material during processing.

Pellet Cutting Water (PCW) plays a key role for a proper cooling, solidification and transport of the material during the process of pelletization. This is particularly true for sticky polyolefins with a high rubber content, such as polyolefin elastomer (POE) and poly-1-butene (PB-1) grades. Some of these grades tend, in fact, to easily create agglomerates during formation and transportation of the pellets, which may result in clogging along the PCW circuit, affecting overall quality/consistency and efficiency of the process.

Controlling the conditions of the PCW is crucial for ensuring quality and consistency of the final pellets, avoiding agglomerates and safeguard the overall process efficiency. The key factors typically monitored and adjusted include temperature control. Cooler water can rapidly solidify the molten polymer, while warmer water may be used if slower cooling is desired. Also, as the stickiness of the product increases, lowering the PCW operating temperature improves operations. The flow rate influences the cooling rate and is therefore a factor that should be controlled or at least maintained constant. Another key factor to be controlled is the size of the PCW system. The size has a bearing on the volumetric rate per ton of polymer that is pelletized. Occasionally, chemicals are added to the water to prevent scaling or bacterial growth, ensuring consistent cooling performance. Pressure control of the water system ensures that it operates within the desired range for effective cooling and transport of pellets.

However, the benefit of controlling the above factors is limited. It would therefore be desirable to (further) enhance efficiency of the pelletization process and quality of the pellets.

US 5,611,983 A discloses an improved process for pelletizing thermoplastic material, particularly ultra low melt viscosity thermoplastic polymer, using an underwater pelletizer adapted to prevent extruded material from agglomerating in the pelletizer, which pelletizer comprising a cutting assembly having (1) a shroud fixedly mounted on the outer periphery of the cutting assembly thereby preventing pellets from being trapped between the die face and the cutting assembly; and (2) novel knives contoured to conform in their angular positions to the curvature of the shroud to avoid pellet agglomeration.

WO 93/24557 discloses a method for substantially minimizing the agglomeration of freshly manufactured polyolefin pellets, comprising adding an effective amount of oxidized high density polyethylene powder during the manufacturing process. The method results in the production of more commercially desirable non-agglomerated polyolefin pellets.

US 5,623,012 A teaches the pelletization of polyolefin polymers, particularly, the addition of a small amount of a mixture of an organic metallic surfactant and a high density polyethylene (herein after HDPE) polymer, wherein the metallic surfactant and the polymeric nucleant cooperate in a synergistic fashion in improving the pelletization of the polyolefin polymers.

WO 2010/130619 A1 teaches a process for the anti-sticking treatment of polymer pellets comprising: a) pelletizing the polymer in the presence of cooling water; b) drying the polymer pellets by means of a centrifugal drier, wherein in step b) an aqueous composition comprising an anti-sticking agent is metered inside said centrifugal drier.

WO 00/35646 A1 provides a method of producing a rotational molding micropellet composition, said method comprising: producing a mixture of a polyolefin and optionally at least one additive; extruding said mixture in melt form through orifices in a die; pelletizing the mixture extruded through said orifices to form micropellets having a particle size distribution D(v, 0.5) of 0.1 to 1 mm, and a value of the ratio of D(v, 0.9)-D(v, 0.1) to D(v, 0.5) of no more than 1; drying said micropellets to a residual water content of no more than 1 % wt; and if desired packaging said micropellets.

EP 3 566 843 A1 discloses a process for preparing polymer pellets having differing compositions comprising forming first polymer pellets having a first pellet composition in a underwater pelletizing unit comprising a cutting chamber (130) filled with process water and separating the first polymer pellets from the process water in a first pellet-water separating unit, i.e. (first) centrifugal drier (135), thereafter disconnecting the first pellet-water separation unit from the underwater pelletizing unit and connecting the underwater pelletizing unit to a second pellet-water separation unit, i.e. (second) centrifugal drier (185), and then forming second polymer pellets having a second pellet composition in the underwater pelletizing unit and separating the second polymer pellets from the process water in the second pellet-water separating unit.

Behind this background, an object of the present disclosure is how the efficiency of a process for producing polyolefin pellets can be improved. More specifically, it was an aim to increase the stability of the pelletizing process, reduce the formation of agglomerates, avoid clogging and enhance product quality.

### DESCRIPTION

This object is achieved by the present disclosure, in particular by a continuous process for production of dry polyolefin pellets as defined in appended claim 1. Embodiments of the disclosure are defined in the dependent claims and described in the following.

According to the present disclosure, a continuous process for production of dry polyolefin pellets comprises:
a) pelletizing polyolefin melt material in an underwater pelletizing system in the presence of pellet cutting water to produce polyolefin pellets, and
b) drying the polyolefin pellets.

The pelletizing involves circulating the pellet cutting water in a pellet cutting water system, the pellet cutting water system comprising pellet cutting water temperature control means, pellet cutting water circulating means, and pellet cutting water storage means, such as a storage tank. The pellet cutting water contains one or more flow aid agents, one or more antifoam agents, and one or more antisticking agents.

The stickiness of polyolefins may result in that the produced pellets stick together and form agglomerates during or after the drying step b). The combination of process aids used in the process of the present disclosure helps to prevent sticking together and formation of agglomerates. It is assumed that the flow aid and antifoam agent create conditions under which the anti-sticking agent is able to coat the surface of the pellets to a particular effective extent, thereby reducing their tackiness.

The term "polyolefin melt material" refers to polyolefin in the molten state. In a process for producing polyolefins by polymerization, the produced polymer is typically extruded, cut and pelletized. Extrusion is carried out in an extrusion unit, where the polymer melt material is homogenized before being pelletized.

The molten polymer is extruded through the holes of the die head into the pellet cooling water contained into the pelletizing chamber of an underwater pelletizing system where it is cut into handleable pellets by rotating blades or knives that operate submerged into water. The circulating water present into the cutting chamber named as "Pellet Cutting Water", cools the pellets quickly, ensuring they solidify before being removed from the water. This process reduces the risk of deformation or agglomeration that can occur with air cooling.

The underwater pelletizing system, as understood herein, is a unit mainly composed by the underwater chamber where the polymer, while cooling down and solidifying, is pelletized. Circulation of the PCW and presence of heat exchanger(s) contribute in clearing out the chamber from the newly formed pellets by transporting them away.

After cutting in the underwater pelletizing system, the pellets are dried in a pellet drying system. The drying step aims at removing excess moisture from the pellets. Suitable drying techniques include centrifugal drying, hot air drying, fluidized bed drying, dehumidification drying, and vacuum drying. In the framework of the present disclosure, any suitable drying technique can be used. Preferred is a centrifugal dryer (spin-dryer).

In between the pelletizing step a) and the drying step b), the process may comprise separating the pellets from the PCW, such as by centrifugal separation or vibrating screens.

The expression "pellet cutting water" (PCW) refers to the water used in the pelletizing step, specifically during the cutting of extruded polymer into pellets. Its functions include rapidly cooling the polymer material to obtain solidified pellets, preventing the pellets from sticking together and helping to maintain uniform pellet size, shape and density as well as reducing dust and airborne particles.

The "pellet cutting water system" is also referred to herein as PCW circulation system or PCW circuit, and denotes the system circulating the PCW and its process aids along a circuit under desired PCW conditions like temperature and flow rate. The system may include a PCW storage for storing PCW, circulation means, e.g., one or more pumps, for moving the PCW in the circuit and PCW temperature control means. The process aids may be included together with the PCW in the PCW storage or in one or more separate storage(s). Further optional components include one or more dosing meter(s) for dosing PCW and/or process aids from the storage(s) into the circuit. The PCW temperature control means may be composed of one or more temperature sensor(s) and one or more heat exchanger(s) in contact with the PCW circulating in the circuit, as well as a control unit for adapting the temperature of the heat exchanger in dependency of the measured PCW temperature and a set (desired) PCW temperature. The PCW circulation system may further comprise a PCW tank designed to compensate for the effects of water flow rate fluctuations.

The flow aid agent, antifoam agent, and antisticking agent belong to the group of process aids. Process aids are additives added to the PCW to enhance the efficiency and quality of the pelletization process. For instance, process aids can help reduce friction and improve the flow of the polymer through the extrusion and pelletizing equipment (flow aid agent), leading to more uniform pellet formation. Additives can modify the surface characteristics of the pellets, improving properties like gloss, stickiness, and resistance to abrasion. Process aids may also help prevent the pellets from sticking together during processing (anti-sticking agent), leading to better handling and storage of the pellets. Moreover, additives may help to reduce or prevent formation of foam during pelletization (anti-foaming agent).

The anti-sticking agent acts by preventing the pellets from sticking together and forming agglomerates. The flow aid agent is capable to lower the PCW's interfacial tension and to additionally prevent formation of agglomerates (including twin pellets). The anti-foaming agent limits formation of foam that may be generated in the PCW water system, e.g., by another process aid.

The inventors found that the feeding points for each process aid may have a significant influence on the process, especially on the tendency that agglomerates are formed. The optimal feeding points additionally contributing to avoiding agglomerates were identified for each process aid leading to the following implementations:
In a first implementation, the process of the disclosure further comprises adding the flow aid agent to the PCW storage means, and to an inlet of the PCW circulating means. The formation of twin and agglomerated pellets can be significantly reduced by feeding through these feeding points.

In a further implementation of the disclosure, the process further comprises adding the antifoam agent to the PCW storage means, and to the inlet of the PCW circulating means. Preferably, the adding is by spraying the antifoam agent onto a free water surface of the PCW storage means.

In a further implementation of the process, the process further comprises adding the antisticking agent to the PCW storage means, and to the inlet of the pellet cutting water circulating means. The antisticking agent, can be fed as such or dispersed or dissolved in solution.

If there are more than one PCW storage, each of the aforementioned additives may be added to one or more of the PCW storages.

In a further implementation of the disclosure, the process further comprises adding the antisticking agent in the drying step (b).

Preferred flow aid agents comprise, or consist of, one or more compounds selected from the group consisting of alkoxylated alcohols, sulfosuccinates, ethoxylated fat amines, polyglycol esters of fatty acids, and mixtures thereof. Preferably, the flow aid agent is selected from ethoxylated mixture of C8 to C20 alcohols, more preferably the C8 to C20 alcohols are secondary alcohols, most preferably the C8 to C20 alcohols are C11 to C15 secondary alcohols.

A total concentration of the flow aid agent in the PCW may be in a range of from 20 to 1200 ppm, preferably 30 to 1000 ppm, more preferably 40 to 800 ppm (w/w). If more than one flow aid agents are used, the aforementioned concentration ranges apply to at least one, preferably each, flow aid agent.

Preferred antifoam agents comprise, or consist of, one or more compounds selected from the group consisting of sorbitan esters, polysorbates and mixtures thereof. Preferably, the antifoam agent is selected from sorbitan esters and its mixtures, the latter meaning that the antifoam agent is constituted by two or more chemically distinct sorbitan esters.

A total concentration of the antifoam agent in the PCW may be in a range of from 100 to 2500 ppm, preferably 250 to 2000 ppm. The concentration ranges apply to at least one antifoam agent, if more than one antifoam agents are used. Preferably, the ranges apply to all antifoam agents involved in the process of the disclosure.

Preferred antisticking agents comprise, or consist of, one or more compounds selected from the group consisting of silicon oils, salts of fatty acids, polyethylene waxes, sterically hindered phenols, food oils, silicate compounds, and carbonate compounds. Preferably, the antisticking agent is selected from salts of fatty acids, more preferably the antisticking agent is selected from metal stearates, most preferably the antisticking agent is calcium stearate.

Moreover, a total concentration of the antisticking agent in the PCW may be in a range of from 250 to 2500 ppm, preferably 500 to 2000 ppm. In case the process involves more than one antisticking agent, the concentration ranges apply to at least one antisticking agent, preferably to all antisticking agents.

The concentrations and concentration ranges referred to herein in relation to the process aids are to be understood to be indicated in weight in relation to the total weight of the PCW in the circuit.

In a further implementation of the disclosure, the polyolefin is selected from polyolefin elastomers and polybutene. Preferably, the polyolefin is either a poly-1-butene or an ethylene-based co-polymer elastomer or a propylene-based co-polymer elastomer. For ethylene-based co-polymer elastomers the preferred co-monomers are propylene, 1-butene, 1-hexene, 1-octene and 1-decene. For propylene-based co-polymer elastomers the preferred co-monomers are ethylene, 1-butene, 1-hexene, 1-octene and 1-decene. For poly-1-butene the preferred co-monomers are ethylene and propylene.

The PCW conditions may additionally help to stabilize the process, avoid agglomerate formation and increase product quality. Accordingly, a further implementation of the disclosure provides that the temperature of the PCW, measured at the inlet of the underwater chamber, is 40 °C or less, preferably in a range of from 5 to 35 °C.

Further in relation to the PCW conditions, a preferred volume flowrate of the PCW over pelletized polymer mass flow is in a range of from 10 to 150 m³/t, preferably in a range of from 15 to 120 m³/t and more preferably in a range of from 20 to 100 m3/t. The expression "volume flow rate of the PCW over pelletized polymer mass flow" refers to a ratio that compares the volume of water used in the pelletizing process to the mass of the polymer being processed. The parameter "volume flow rate of the PCW" refers to the amount of PCW that flows through the system in a given time, typically measured in liters per minute (L/min) or cubic meters per hour (m³/h). The parameter "pelletized polymer mass flow" is the mass of the polymer being pelletized over the same period, often measured in kilograms per minute (kg/min) or tons per hour. The ratio of the volume flow rate of PCW to the pelletized polymer mass flow helps determine how much water is used relative to the amount of polymer processed. This can be expressed in terms like liters of water per kilogram of polymer (L/kg) or cubic meters per ton (m³/t). This metric is indicative of the process' efficiency, quality, and resource utilization.

In a further implementation, the pelletized polymer mass flow is greater than 0.1 t/h, preferably greater than 0.5 t/h, more preferably greater than 1 t/h and most preferably greater than 2 t/h.

### BRIEF DESCRIPTION OF THE DRAWING

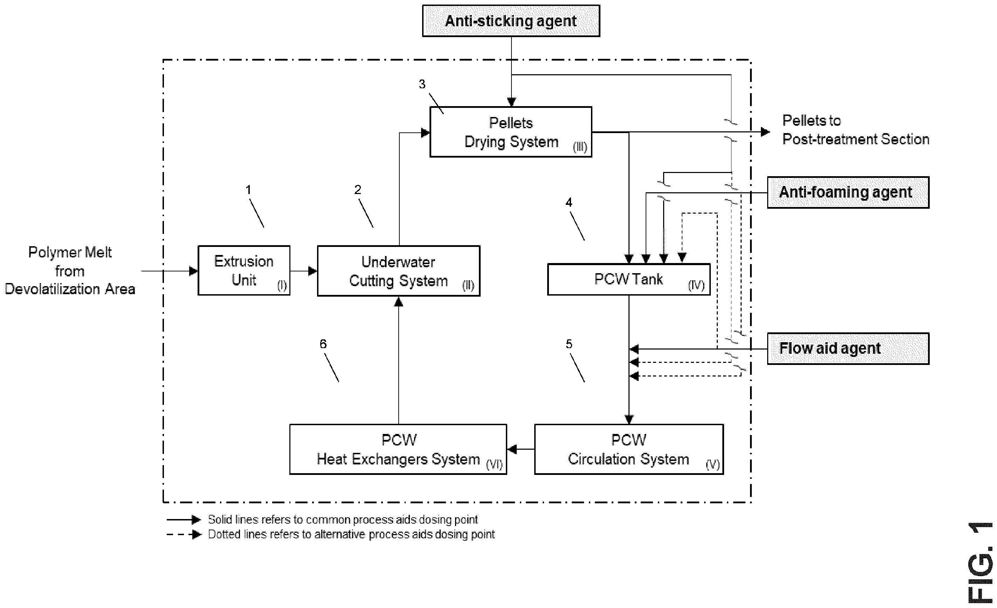

Fig. 1 shows a process setup specifically adapted for carrying out an embodiment of a continuous process for production of dry polyolefin pellets by pelletizing polyolefin melt material in an underwater pelletizing system in the presence of pellet cutting water, to produce polyolefin pellets, and drying the polyolefin pellets in accordance with the present disclosure.

### DESCRIPTION OF AN EMBODIMENT OF THE DISCLOSURE

An embodiment of the present disclosure will now be described in detail with reference to the process setup shown in Figure 1. The process setup of Fig. 1 has to be considered illustrative and not limitative of the scope of the present disclosure.

After polymerization and optionally purification from unreacted monomers, volatiles, etc. in the devolatilization area, the produced polyolefin melt may be conveyed into a static mixer or an extruder. The static mixer (not shown) has the function of mixing the polymer melt with suitable additives, such as antioxidant compounds, nucleating agents, pigments, etc. The extruder (not shown), such as a side-arm extruder or a continuous twin screw co-rotating extruder can be used for melting and mixing each other the additives used for the polyolefin compounding.

According to an embodiment, the polymer enters the PCW circuit through the extrusion unit 1. The PCW circuit comprises an underwater cutting system 2, a pellet drying system 3, a PCW tank 4, a PCW circulation system 5 and a PCW heat exchanger system 6. The PCW is continuously made to flow through the circuit using the PCW circulation system 5. The PCW tank 4, also referred to as level compensation tank, helps to keep the effects of PCW flow rate fluctuations under control. The flow rate can be expressed in terms of PCW specific flow rate ratio (defined as PCW volumetric flowrate over pelletized polymer mass flowrate), which, in the present embodiment, is aimed at 50 m³/t.

The PCW is first passed to an underwater pelletizer constituted from the extrusion unit 1 and an underwater cutting system 2. The extrusion unit 1 aims at homogenizing the polymer melt before being pelletized.

The underwater cutting system 2 is mainly composed by an underwater chamber where the polymer, while cooling down and solidifying, is pelletized. Presence of PCW, which temperature is controlled with the help of the PCW heat exchanger system 4, contributes in clearing out the chamber from the newly formed pellets by transporting them away. In other terms, in the underwater cutting system 2 the extruded polymer is cut into pellets by the action of rotating knife blades, and the formed pellets are immediately cooled by the surrounding PCW. In the present embodiment, the temperature of the PCW is set to 20°C.

The pellets are then guided to the pellet drying system 3, usually a spin-dryer, which serve to separate the polymer pellets from the PCW. An antisticking agent is added here to avoid that the pellets stick together as they are dried. An anti-foaming agent is added to the PCW tank 4. Also, the anti-sticking agent is added thereto. A flow aid agent is added into the circuit downstream of the PCW tank 4 and upstream of the PCW circulation system 5. Also, the anti-foaming and anti-sticking agents are added at this point.

In the present embodiment, a mixture of secondary ethoxylated alcohols based on C11-C15 is used as flow aid agent. Each compound is used at 400 ppm. 1000 ppm calcium carbonate is used as anti-sticking agent. The anti-foam agent consisted of 1000 ppm polysorbate.

The present disclosure further becomes apparent from the following examples, wherein all percentages are by weight, unless expressed otherwise.

### EXAMPLES

### Example 1.A

Pellets of a commercial polyolefin elastomer (Engage 7467 supplied by Dow Chemical Company, Midland, USA) are continuously extruded by means of a ZSK58 twin screw extruder (supplied by Coperion, Stuttgart, Germany) and pelletized by means of an underwater pelletizing system (supplied by Filtec, Badia Polesine, Italy) at a flow rate of 190 kg/h. Pellet cutting water is made recirculating along the system at a flow rate of 6 m³/h (corresponding to a flow rate ratio between water and polymer of 32 m³/t) and a temperature of 30 °C, without any process aid mixed together.

The formation of twin pellets and agglomerates is evident. The formation and the accumulation of these agglomerates lead to the generation of cloggings along the pellet cutting water system, negatively affecting the stability the process and leading to a premature stop of the run.

### Example 1.B

Example 1.A is repeated at the same conditions, except for the presence of the process aids in pellet cutting water. In particular, 500 ppm of Detack EC9630D (supplied by Nalco Europe Sàrl, Wallisellen, Switzerland, containing 30 to 60 %wt of alcohols, C11-C15 secondary, ethoxylated) and 500 ppm of Sabonol TO (containing sorbitan ester, supplied by Sabo, Levate, Italy) are poured and dispersed into the circuit just upstream of the circulation pump. The addition of these process aids is performed before starting. No make up stream is considered during the run, since the losses from the system are considered negligible due to the small size of the line and the shortness of the time of the run.

The formation of twin pellets and agglomerates is significantly reduced as compared to Example 1.A. The process is observed to be stable without any unwanted stop.

However, the pellets that exit the spin-dryer unit show a limited flowability and are prone to bridging.

A controlled and limited formation of foam in the pellet cutting water tank is observed.

| Process Aid | Commercial Product | Concentration in PCW, ppm | Feeding Point |
|---|---|---|---|
| Anti-foaming | Sabo Sabonol TO | 500 | Dispersed in PCW upstream of PCW circulation pump |
| Flow aid | Nalco Detack EC9630D | 500 | Dispersed in PCW upstream of PCW circulation pump |

| | | | |
|---|---|---|---|
| *Concentration values shall be referred to the commercial product. | | | |

### Example 1.C

Example 1.B is repeated at the same conditions, except for the addition of 2000 ppm of Fluocast (supplied by Faci, Carasco, Italy containing 50%wt of calcium stearate) into pellet cutting water, which correspond to a final concentration of 1000 ppm of calcium stearate intended to serve as an antisticking agent. Just like Detack EC9630D and Sabonol TO, it is poured and dispersed into the pellet cutting water circuit just upstream of the circulation pump before the start of the run.

Also in case the formation of twin pellets and agglomerates is not observed as well as the occurrence of any unwanted stop.

A controlled and limited formation of foam in the pellet cutting water tank is observed.

The pellets that exit the spin-dryer are sensibly more free-flowing and easy to handle if compared to those described in the Example 1.B.

| Process Aid | Commercial Product | Concentration in PCW, ppm | Feeding Point |
|---|---|---|---|
| Anti-sticking | Faci Fluocast | 2000 | Dispersed in PCW upstream of PCW circulation pump |
| Anti-foaming | Sabo Sabonol TO | 500 | Dispersed in PCW upstream of PCW circulation pump |
| Flow aid | Nalco Detack EC9630D | 500 | Dispersed in PCW upstream of PCW circulation pump |

### Example 2.A.

Koattro KT MR05, a plastomeric material based on LyondellBasell technology, is polymerized and pelletized in a commercial plant designed and owned by LyondellBasell. Pelletization of the material occurs through an underwater pelletizing system (supplied by Coperion, Stuttgart, Germany) while the drying of the pellets occurs trough a continuous spin-dryer (supplied by Gala, Eagle Rock, USA), at a flowrate of 4.5 t/h. Pellet cutting water is kept at a temperature of 15°C and forced to recirculate along the circuit at a flowrate of 500 m³/h.

Fluocast-EX10 (supplied by Faci, Carasco, Italy containing 10%wt of calcium stearate), Detack EC9630D and Sabonol TO are continuously fed just upstream of the Pellet Cutting Water Circulation System inlet, maintaining a target concentration in PCW.

| Process Aid | Commercial Product | Target Concentration in PCW | Feeding Point |
|---|---|---|---|
| Anti-sticking | Faci Fluocast EX-10 | 10000 ppm | Continuously fed upstream of the PCW circulation system inlet |
| Anti-foaming | Sabo Sabonol TO | 1000 ppm | Continuously fed upstream of the PCW circulation system inlet |
| Flow aid | Nalco Detack EC9630D | 1000 ppm | Continuously fed upstream of the PCW circulation system inlet |

In addition, Fluocast EX-10 is also sprayed into the spin-dryer of the Pellets drying system targeting a concentration range of 200-500 ppm wt of calcium stereate with respect to the pellets.

Operating this way, formation of twin pellets and agglomerates is not recorded and the process is observed being stable without any unwanted stop. Handling of polymer pellets downstream of the Pellets drying system resulted acceptable. On the other hand, issues with foam generation at the PCW Tank lead to an overflow of the PCW itself, therefore causing loss of part of the process aids and affecting the area housekeeping.

### Example 2.B.

Example 2.A is repeated at the same conditions, except for a different metering point for the anti-foam agent.

| Process Aid | Commercial Product | Target Concentration in PCW | Feeding Point |
|---|---|---|---|
| Anti-sticking | Faci Fluocast EX-10 | 10000 ppm | Continuously fed upstream of the PCW circulation system inlet |
| Anti-foaming | Sabo Sabonol TO | 1000 ppm | Sprayed on top of the pellet cutting water's free surface of the PCW Tank |
| Flow aid | Nalco Detack EC9630D | 1000 ppm | Continuously fed upstream of the PCW circulation system inlet |

Foam generations is significantly reduced by spraying Sabo Sabonol TO on top of the pellet cutting water's free surface of the PCW Tank. Operating this way, issues experienced in example 2.A. (i.e., loss of part of the process aids and influence on the housekeeping of the area) are significantly reduced leading to an optimization of the operations and the related costs (OPEX).

This is different from Examples 1B, 1C, where the Sabonol is poured and dispersed into the circuit just upstream of the circulation pump.

## Claims

1. A continuous process for production of dry polyolefin pellets comprising:
a) pelletizing polyolefin melt material in an underwater pelletizing system in the presence of pellet cutting water, to produce polyolefin pellets; and
b) drying the polyolefin pellets;
the process further comprising circulating the pellet cutting water in a pellet cutting water system comprising
x) pellet cutting water temperature control means,
y) pellet cutting water circulating means, and
z) pellet cutting water storage means;
wherein the pellet cutting water contains
(i) one or more flow aid agents,
(ii) one or more antifoam agents, and
(iii) one or more antisticking agents.

2. The process according to claim, further comprising adding the flow aid agent (i) to one or more of
- the pellet cutting water storage means z) and
- the inlet of the pellet cutting water circulating means y).

3. The process according to any of claims 1 or 2, further comprising adding the antifoam agent (ii) to one or more of
- the inlet of the pellet cutting water circulating means y),
- the pellet cutting water storage means z), preferably wherein the addition is by spraying it onto the free water surface of the pellet cutting water storage means z).

4. The process according to any of claim 1 to 3, further comprising adding the antisticking agent (iii) to one or more of
- the pellet cutting water storage means z) and
- the inlet of the pellet cutting water circulating means y).

5. The process according to claim 4, further comprising adding the antisticking agent (iii) in drying step b).

6. The process according to any of the preceding claims, wherein the flow aid agent (i) is selected from the group consisting of
(i)a.alkoxylated alcohols,
(i)b.sulfosuccinates,
(i)c.ethoxylated fat amines,
(i)d.polyglycol esters of fatty acids,
preferably wherein the flow aid agent (i) is selected from ethoxylated mixture of C₈ to C₂₀ alcohols,
more preferably wherein the C₈ to C₂₀ alcohols are secondary alcohols,
most preferably wherein the C₈ to C₂₀ alcohols are C₁₁ to C₁₅ secondary alcohols.

7. The process according to any of the preceding claims, wherein the total concentration of the flow aid agent (i) in the pellet cutting water is in a range of from 100 to 2500 ppm wt.

8. The process according to any of the preceding claims, wherein the antifoam agent (ii) is selected from the group consisting of
(ii)a.sorbitan esters, and
(ii)b.polysorbates,
preferably wherein the antifoam agent (ii) is selected from one or more sorbitan esters.

9. The process according to any of the preceding claims, wherein the total concentration of the antifoam agent (ii) in the pellet cutting water in a range of from 100 to 2500 ppm.

10. The process according to any of the preceding claims, wherein the antisticking agent (iii) is one or more agent selected from the group consisting of
(iii)a. silicon oils,
(iii)b. salts of fatty acids,
(iii)c. polyethylene waxes,
(iii)d. sterically hindered phenols,
(iii)e. food oils, silicate compounds, and
(iii)f. carbonate compounds,
preferably wherein the antisticking agent (iii) is selected from salts of fatty acids,
more preferably wherein the antisticking agent (iii) is selected from metal stearates,
most preferably wherein the antisticking agent (iii) is calcium stearate.

11. The process according to any of the preceding claims, wherein the total concentration of the antisticking agent (iii) in the pellet cutting water in a range of from 250 to 2500 ppm.

12. The process according to any of the preceding claims, wherein the polyolefin is selected from polyolefin elastomers and polybutene,
preferably wherein the polyolefin is either a poly-1-butene or an ethylene-based co-polymer elastomer or a propylene-based co-polymer elastomer.

13. The process according to any of the preceding claims, wherein the temperature of the pellet cutting water, measured at the inlet of the underwater chamber, is 40 °C or less, preferably wherein the temperature is in a range of from 5 to 35 °C.

14. The process according to any of the preceding claims, wherein the volume flowrate of pellet cutting water over pelletized polymer mass flow is in a range of from 10 to 150 m³/t, preferably in a range of from 15 to 120 m³/t and more preferably in a range of from 20 to 100 m³/t.

15. The process according to any of the preceding claims, wherein the pelletized polymer mass flow is greater than 0.1 t/h, preferably greater than 0.5 t/h, more preferably greater than 1 t/h and most preferably greater than 2 t/h.
